# EUROPÄISCHE PATENTSCHRIFT

(11) **EP 3 133 931 B1**
(45) Veröffentlichungstag und Bekanntmachung des Hinweises auf die Patenterteilung: **02.06.2021**
(21) Anmeldenummer: 15719435.8
(22) Anmeldetag: 21.04.2015
(51) Int. Cl.: A23G 1/04, A23G 1/20, A23G 3/02

(54) **GIESSMASCHINE MIT STECKVERBINDUNG**
CASTING MACHINE WITH A PLUG-IN CONNECTION
MACHINE DE COULÉE DOTÉE DE CONNECTEUR À FICHES

(30) Priorität: 25.04.2014 EP 14166037
(43) Veröffentlichungstag der Anmeldung: 01.03.2017
(73) Patentinhaber: Bühler AG, 9240 Uzwil (CH)
(72) Erfinder: KLIMKE, Ralf, 58762 Altena (DE); ZIMMERMANN, Stefan, 51702 Bergneustadt (DE); HUPERZ, Frank, 51702 Bergneustadt (DE); PAUL, Michael, 51702 Bergneustadt (DE)
(74) Vertreter: Hepp Wenger Ryffel AG
(86) Internationale Anmeldenummer: PCT/EP2015/058562
(87) Internationale Veröffentlichungsnummer: WO 2015/162114

(56) Entgegenhaltungen:
- EP-A1- 0 213 709
- EP-A1- 2 353 401
- WO-A2-2009/130186
- GB-A- 880 735
- US-A- 2 850 990
- US-A1- 2006 051 458

## Beschreibung

Die Erfindung bezieht sich auf eine Giessmaschine mit einer entfernbaren Komponente, ein Verfahren zum Einsetzen einer Komponente in einen Maschinenrahmen einer Giessmaschine, ein Verfahren zum Entfernen einer Komponente aus einem Maschinenrahmen einer Giessmaschine, sowie einen einem Bausatz zum Umrüsten einer Giessmaschine.

Die Giessmaschine dient zum Giessen einer fliessfähigen Lebensmittelmasse, insbesondere einer fettbasierten Masse, bevorzugt einer Masse mit suspendierten Feststoffpartikeln, wie eine Schokoladenmasse.

Gattungsgemässe Giessmaschinen sind im Stand der Technik bekannt und werden nachfolgend kurz in ihrer Funktionsweise erläutert.

Derartige Giessmaschinen umfassen in der Regel einen Tank zur Aufnahme der fliessfähigen Masse und eine Giessanordnung, die zumeist unterhalb des Tanks angeordnet ist. Tank und Giessanordnung sind typischerweise an oder innerhalb eines Maschinenrahmens angeordnet, an welchem Motoren und Antriebsmittel zum Betreiben der Giessmaschine angebracht sind. Der Tank dient als Massebehälter. Er kann ein Rührwerk aufweisen, welches eine horizontal oder vertikal ausgerichtete Welle umfasst. Es kann auch eine Förderschnecke mit vertikal oder horizontal ausgerichteter Welle und/oder eine Pumpvorrichtung vorgesehen sein, mittels der die zu vergiessende Masse an die Giessanordnung herangebracht wird. Der Tank kann mit einem Druck beaufschlagbar sein, wenn er beispielsweise für die Herstellung von Luftschokolade verwendet wird. Der Tank ist in der Regel temperierbar. Die Giessanordnung umfasst in der Regel Pumpmittel und/oder Dosiermittel, mit denen Masseportionen aus der Giessmaschine ausgetragen werden. Diese werden in eine unterhalb der Giessmaschine befindliche Aufnahmevorrichtung abgegeben, beispielsweise in Giessformen, die auf einem Band an die Giessmaschine heran und von dort wieder weg befördert werden. Bei den Pump- und/oder Dosiermitteln kann es sich um ein horizontales Zahnwalzenpaar handeln, um vertikal ausgerichtete Dosierkolben, um horizontal ausgerichtete Drehschieberkolben, um eine Kombination aus bevorzugt horizontalen Pumpkolben und Drehventilen handeln. Zumeist enthalten die Giessmaschinen Düsenplatten mit einer Vielzahl von Düsen, die von flexiblen Düsenklappen, von einem Messermundstück oder von einem Verschlussschieber verschlossen werden können. Diese sind zum Beispiel auf einer unterhalb der Düsenplatte angeordneten Verschlussplatte angebracht. Der Maschinenrahmen kann fest gegenüber weiteren Bestandteilen einer Giessanlage angebracht sein oder selbst bewegbar gelagert sein, so dass beispielweise die Giessmaschine über eine gewisse Strecke mit den Giessformen mitbewegt werden kann oder die gesamte Giessmaschine einschliesslich aller Motoren und Antriebe aus einer Betriebsposition in eine Wartungsposition bringbar ist.

Die Komponenten der Giessmaschine, zu denen der Tank, die Giessanordnung, die Düsenplatte, die Verschlussplatte oder Module umfassend Kombinationen davon gehören, müssen von Zeit zu Zeit gereinigt werden oder, je nach Verwendung der Giessmaschine, ausgewechselt werden. Dies kann bei einem Produktwechsel, einem Giessformenwechsel, einer Wartung oder einer Reparatur nötig werden. Zu diesem Zweck können einzelne Komponenten unabhängig voneinander von dem Rahmen der Giessmaschine entfernt oder ausgetauscht werden, wie dies zum Beispiel in WO 2009/130186 A2 gezeigt ist. Der Ein-, Aus- oder Umbau der Giessmaschinenkomponenten ist mühselig, zeitraubend und kostenaufwändig. Um den Umbau, einen Reinigungsvorgang und/oder eine Wartung zu vereinfachen, können auch ganze Module gleichzeitig aus einem Rahmen der Giessmaschine entfernt werden, wie dies z.B. ebenfalls in WO 2009/130186 A2 gezeigt ist.

Teile von Giessmaschinen können mit anderen Teilen der Giessmaschine verschraubt sein. So offenbart GB880735 einen Balken, der nebeneinander angeordnete Giesszylinder trägt und der an einer Rahmenplatte angeschraubt ist. US2850990 zeigt eine Füllstation, bei welcher ein Ventilblock mit einem Vorratstank verschraubt ist. EP0213709 offenbart eine Vorrichtung zur Ausgabe von Nahrungsmitteln, wobei ein Ventilkörper für ein Ventil auf Montagestangen geschoben werden kann und eine Schraubbefestigung erfolgt.

Aus der Druckschrift EP 2 353 401 A1 ist eine weitere Giessmaschine bekannt, bei welcher der Tank und die Giessanordnung ein Modul bilden, das in einem Stück von dem Maschinenrahmen entfernbar ist. Das Modul weist einen eigenen Rahmen mit zwei entgegengesetzten, lateralen Fortsätzen auf, die in festen Positionen auf jeweiligen Oberflächen von Armen des Maschinerahmens ruhen. Die Oberflächen, auf denen die lateralen Fortsätze des Moduls ruhen, sind obere Oberflächen. Obere Oberflächen sind einerseits gut für Montagezwecke zugänglich, andererseits bilden sie aber auch exponierte Flächen, die leicht einer Verschmutzung ausgesetzt sind, wenn das Modul nicht auf der Fläche ruht.

Eine stabile Positionierung des Moduls gemäss EP 2 353 401 A1 wird erreicht, wenn die Fortsätze des Moduls, welche die Auflageflächen auf den oberen Oberflächen der Arme bilden, nicht zu weit vom Schwerpunkt entfernt sind, also etwa mittig von einem vertikalen Durchmesser des Moduls angeordnet sind. Dies führt dazu, dass der Tank oberhalb der Arme angeordnet ist. Eine Auflage auf oberen Oberflächen hat somit den Nachteil, dass entweder der Tank oben aus dem Giessmaschinenrahmen hervorsteht, was die Zugänglichkeit erschwert, oder die Arme tief genug an einer rückwärtigen Rahmenplatte angeordnet werden, damit das Modul im Wesentlichen innerhalb des Rahmens angeordnet ist, was jedoch die generelle Stabilität des Rahmens beeinträchtigen kann.

Alternativ kann das Modul gemäss EP 2 353 401 A1 mit einem stabilen Rahmen versehen werden, der den Auflagepunkt nach oben verlagert. Ein solcher Rahmen erfordert jedoch Platz und erhöht das Gewicht des Moduls.

Um eine zentralere Anordnung der Fortsätze des Moduls in vertikaler Richtung zu ermöglichen und den Schwerpunkt des Moduls besser im Maschinenrahmen auszurichten, ist in der Praxis eine Lösung bekannt, bei welcher als Auflageelemente an den Armen nach innen und nach unten versetzte Prismenschienen vorgesehen sind. Diese sind besser geschützt gegenüber möglichen Verschmutzungen und Stössen, weil sie innerhalb des Maschinenrahmens angeordnet sind, und sie bieten einen tieferen Auflagepunkt, was zu einer stabileren Lagerung des Moduls führt.

Das Halten des Moduls durch eine Auflage von Fortsätzen auf Oberflächen hat allerdings den Nachteil, dass eine Fixierung der festen Position durch eine vertikale Sperre zu erfolgen hat, beispielsweise vertikal ausgerichtete Lokalisierungsstifte oder vertikal einzuführende Verschraubungen. Diese Befestigungsmittel sind in der Regel schwer zugänglich und erfordern den Zugang zu dem Maschinenrahmen von einer weiteren Richtung aus. Der Maschinenrahmen muss nicht nur in einer Einschubrichtung offen sein, aus welcher das Modul in den Maschinenrahmen eingeführt wird, sondern auch noch aus einer Richtung, die einen Zugang zu den vertikalen Fixiermitteln erlaubt.

Es besteht daher die Aufgabe, eine Giessmaschine und ein Verfahren zum Umrüsten einer Giessmaschine bereitzustellen, mit welchen die Nachteile des Stands der Technik überwunden werden, mit welchen eine einfache Bedienbarkeit, eine gut handhabbare Fixierung und ausserdem eine präzise und solide Verbindung zwischen den Komponenten der Giessmaschine und dem Giessmaschinenrahmen ermöglicht wird.

Die Aufgabe wird gelöst mit einer Giessmaschine gemäss Anspruch 1. Die Giessmaschine umfasst mindestens einen Tank, der ein Produkt zum Giessen enthält und mit einer Rührvorrichtung ausgestattet ist, um das Produkt darin zu rühren. Die Giessmaschine weist eine Giessanordnung auf, die unterhalb des Tanks lokalisiert ist. Die Giessanordnung umfasst mindestens eine Reihe von horizontalen Kolben, die einen Ansaugtakt, um Produkt von dem Tank zu ziehen, und einen Ausstosstakt, um das das eingezogene Produkt auszustossen, durchführen. Die Giessanordnung umfasst ausserdem mindestens eine Ausgabevorrichtung, die sich zwischen einer ersten Position, um das durch die Kolben eingezogene Produkt aufzunehmen, und einer zweiten Position, die ein Abfliessen des durch die Kolben ausgestossenen Produkts ermöglicht, dreht. Die Giessanordnung umfasst bevorzugt eine Vielzahl von Düsen.

Die Giessmaschine weist einen Motor zum Drehen der Ausgabevorrichtung auf und Betätigungsmittel, um die Kolben hin und her zu bewegen, wobei die Betätigungsmittel lösbar mit den Kolben verbunden sind.

Die Giessmaschine weist einen Maschinenrahmen auf, der den Motor trägt und zwei Arme umfasst, die entlang jeweiliger paralleler horizontaler Achsen vorstehen und mit den Betätigungsmitteln ausgerüstet sind.

Der Rahmen kann bei bestimmungsgemässer Ausrichtung der Giessmaschine horizontal umlaufend gestaltet oder U-förmig zu einer Seite offen gestaltet sein. Die Arme sind Teile des Rahmens, die einander gegenüber liegen und zwischen denen das Modul im montierten Zustand angeordnet ist.

Insbesondere ist vorgesehen, dass das Modul zwischen den Armen entlang einer Achse, die im Wesentlichen parallel zu den Achsen der Arme verläuft, in dem Rahmen bewegbar ist.

Der Tank und die Giessanordnung bilden Teil eines Moduls, das in einem Stück von dem Rahmen entfernbar ist. Dabei ist das Modul lösbar mit dem Motor verbunden.

Zur Bildung des Moduls können Tank und Giessanordnung eine bauliche Einheit bilden und/oder lösbar miteinander verbunden sein.

Das Modul ist mit einem weiteren Rahmen ausgestattet.

Der weitere Rahmen kann einteilig mit dem Tank oder mit der Giessanordnung verbunden sein oder es ist ein separater Rahmen vorgesehen, an welchem Tank und/oder Giessanordnung befestigt sind. Der weitere Rahmen kann den Tank und/oder die Giessanordnung vollständig umfassen oder zu einer Seite offen sein.

Erfindungsgemäss ist der weitere Rahmen in dem Maschinenrahmen, insbesondere nur, über eine im Wesentlichen horizontal angeordnete formschlüssige Steckverbindung, insbesondere eine Bolzenverbindung, befestigt.

Eine Auflageschiene oder Auflageplatte ist nicht zum Halten und/oder Fixieren notwendig.

Die Steckverbindung ist erfindungsgemäß entlang einer Achse ausgerichtet, die im Wesentlichen parallel zu den Achsen der Arme des Rahmens verläuft, entlang derer das Modul bevorzugt in dem Rahmen bewegbar ist.

Die Aufgabe wird ausserdem gelöst durch eine Giessmaschine gemäss Anspruch 2, insbesondere eine Giessmaschine wie oben beschrieben.

Die Giessmaschine zum Vergiessen von Lebensmittelmasse, insbesondere Fettmasse, weist einen Maschinenrahmen auf, eine Giessanordnung zum Austragen der Lebensmittelmasse aus der Giessmaschine, die bevorzugt unterhalb eines Tanks angeordnet ist, und mindestens einem Tank zum Zuführen der Lebensmittelmasse zu der Giessanordnung. Die Giessanordnung umfasst bevorzugt eine Vielzahl von Düsen.

Bei dem Tank kann es sich um einen Massebehälter zum Zwischenspeichern der Lebensmittelmasse handeln oder um eine Zufuhrleitung mit Verteiler, über welche die Masse von einem entfernteren und/oder ausserhalb der Giessmaschine angeordneten Massebehälter zu der Giessanordnung geführt wird.

Mindestens eine Komponente der Giessmaschine, insbesondere der Tank, die Giessanordnung und/oder ein Modul, umfassend einen Tank und eine Giessanordnung, ist von dem Maschinenrahmen entfernbar. Insbesondere ist die Komponente gleichzeitig auch von einem Motor und/oder einem Betätigungsmittel entfernbar.

Erfindungsgemäss ist mindestens eine Komponente mittels einer im Wesentlichen horizontal angeordneten Steckverbindung, insbesondere einer Bolzenverbindung, an dem Maschinenrahmen befestigt. Insbesondere wird die Befestigung und Halterung der Komponente im Maschinenrahmen im montierten Zustand nur über die Steckverbindung erreicht und nicht mit einer Auflage auf einer, insbesondere oberen, Auflagefläche und/oder Auflageschiene unterstützt.

Unter einer Steckverbindung wird im Rahmen der Erfindung eine Wirkverbindung zwischen einem vorstehenden Bauteil und einer korrespondierenden Ausnehmung bezeichnet, wobei das vorstehende Teil entlang einer Achse in die Ausnehmung führbar ist und wobei die Ausnehmung das vorstehende Bauteil im montierten Zustand zumindest abschnittsweise vollständig umgibt, so dass sich ein Formschluss ergibt. Wenn Giessrahmen und Komponente ihre bestimmungsgemässe Ausrichtung aufweisen, ist die Achse insbesondere im Wesentlichen horizontal angeordnet, das heisst die Achse ist nicht vertikal ausgerichtet und liegt auf der Horizontalen oder schliesst mit der Horizontalen einen kleinen Winkel, jedenfalls einen Winkel kleiner als 90°, insbesondere kleiner als 45°, ein.

Bei dem vorstehenden Bauteil kann es sich um ein oder mehrere stiftartige, zapfenartige oder leistenartige Elemente handelt. Die korrespondierende Ausnehmung besitzt im Wesentlichen eine zur Form des vorstehenden Bauteils komplementäre Geometrie.

Die erfindungsgemässe Steckverbindung sorgt für eine leicht herstellbare und haltbare Verbindung zwischen der Komponente und dem Giessmaschinenrahmen.

Die Steckverbindung ist insbesondere entlang einer Achse ausgerichtet, die im Wesentlichen parallel zu den Achsen der Arme des Rahmens verläuft, entlang derer das Modul bevorzugt in dem Rahmen bewegbar ist.

Im Gegensatz zu einer flächigen Auflage, bei der ohne zusätzliche Führungen grundsätzlich ein zweidimensionales Verschieben möglich ist, wird bei einer Steckverbindung durch die umgebende Einfassung des vorstehenden Bauteils in der korrespondierenden Ausnehmung für die Montage und Demontage eine bestimmte Richtung definiert und eine Bewegung in andere Richtungen muss nicht mit einer zusätzlichen Sicherung unterbunden werden.

Die Steckverbindung gibt ausserdem eine eindeutige Einschubrichtung vor, sodass die Positionierung der Komponente sehr präzise ist.

Die Steckverbindung kann über eine Schraube und ein Schraubenloch hergestellt werden, bevorzugt wird jedoch das vorstehende Bauteil ohne Drehung in die Endposition in der Ausnehmung gebracht.

Bevorzugt ist die Steckverbindung daher als Bolzenverbindung ausgeführt, wobei die Steckverbindung mindestens ein Bolzenloch, insbesondere ein Sackloch oder eine Durchdringung einerseits, und mindestens einen im montierten Zustand darin angeordneten Bolzen andererseits umfasst.

Die Bolzenverbindung wird vorzugsweise durch mindestens einen an der Komponente angeordneten Bolzen und/oder mindestens ein an der Komponente angeordnetes Bolzenloch einerseits, und mindestens ein an dem Maschinenrahmen angeordnetes Bolzenloch und/oder mindestens einen an dem Maschinenrahmen angeordneten Bolzen andererseits ausgebildet. Dabei sind der Bolzen und das Bolzenloch so angeordnet, dass sie im montierten Zustand zusammenwirken, insbesondere einen Formschluss bilden, und die Komponente im Maschinenrahmen halten.

Insbesondere ist die Komponente innerhalb des Maschinenrahmens bewegbar, wobei Bolzen und Bolzenloch für eine Zentrierung sorgen und damit für eine präzise Positionierung der Komponente in dem Maschinenrahmen der Giessmaschine.

Die Bewegung der Komponente kann über eine Verschiebung erfolgen, wobei die Komponente entweder auf einer externen Tragevorrichtung aufliegt, auf einem an dem Maschinenrahmen angebrachten Bauteil oder die Komponente besitzt ein mit ihr verbundenes Gestell.

Bevorzugt ist mindestens ein Bolzen der Bolzenverbindung als Zentrierbolzen ausgeführt, so dass sich insbesondere ein Bolzen und ein zugehöriges Bolzenloch axial verjüngen, weiter insbesondere zylindrisch oder konisch ausgebildet sind.

Der Bolzen und das zughörige Bolzenloch weisen bevorzugt eine Zylindergeometrie auf. Es kann auch eine polygonale Querschnittsfläche des Bolzens und des zugehörigen Bolzenlochs vorgesehen sein oder es sind Passnuten, schienenartige Erhebungen oder Einführrampen auf dem vorstehenden Bauteil vorgesehen.

Der Zentrierbolzen führt dazu, dass noch kurz vor der Herstellung der Bolzenverbindung, die Komponente noch nicht exakt relativ zum Maschinenrahmen positioniert werden muss. Erst bei der Herstellung der Bolzenverbindung wird die Komponente durch die Zentrierung in die exakte Position zum Maschinenrahmen, beispielsweise in die korrekte Höhe, gebracht.

Bevorzugt umfasst die Steckverbindung mindestens zwei Bolzen, welche die gleiche axiale Ausrichtung aufweisen, d.h. die Achsen verlaufen parallel und die freien Enden weisen in dieselbe Richtung. Die Komponente kann somit präzise horizontal und/oder vertikal ausgerichtet werden und ist im montierten Zustand gegenüber Schwingungen gesichert. Vorzugsweise sind mehrere, insbesondere vier, Bolzen vorgesehen, die in einer horizontalen Ebene gleichmässig um die Komponente herum verteilt sind, also zwei Bolzen vorne, zwei hinten, zwei rechts und zwei links.

Die Steckverbindung kann so ausgeführt sein, dass sie arretierbar ist. Das vorstehende Bauteil kann dazu beispielsweise drehbar ausgeführt sein, ein Aussengewinde aufweisen, mit welchem eine Schraubverbindung herstellbar ist, oder Rastnocken aufweisen, mit welchen ein Bajonettverschluss herstellbar ist.

Bevorzugt ist das vorstehende Bauteil fest montiert.

In einer vorteilhaften Ausführung der Erfindung weist ein Bolzen einer Bolzenverbindung eine Öffnung für ein Befestigungselement auf.

Der Bolzen kann mit einem Splint gesichert werden. Bevorzugt sind jedoch ein Bolzen und ein korrespondierendes Bolzenloch jeweils mit einer axialen Gewindebohrung versehen, so dass insbesondere die vollständige Ausbildung eines Formschlusses erreichbar ist durch eine Verschraubung, die längs durch einen Bolzen geführt ist.

Diese Fixierung hat den Vorteil, dass sie entlang derselben Richtung erfolgt, wie der Einschub der Komponente. Die Schraubverbindung kann also von derselben Seite gelöst oder fixiert werden, von welcher der Einschub der Komponente erfolgt.

In einer vorteilhaften Ausführung der Erfindung besitzt ein Bolzen der Bolzenverbindung axial oder radial verschiebbare Elemente oder Elemente, deren radiale Ausdehnung veränderbar ist zum radialen Anpressen des Bolzens in einem Bolzenloch. Die verschieb- oder veränderbaren Elemente können beispielweise erst in ihre Endposition gebracht werden, wenn ein Teil des Bolzens, der einen kleineren Durchmesser als das Bolzenloch aufweisen kann, bereits in das Bolzenloch eingeführt ist, und dann eine form- oder kraftschlüssige Verbindung herstellen. Der Bolzen ist dann sehr leicht in das Bolzenloch führbar und dient zunächst der Positionierung der Komponente und erst in einem zweiten Schritt wird eine Fixierung und Halterung hergestellt.

Als axial verschiebbares Element kann beispielsweise ein konisch geformtes Element vorgesehen sein, das auf einer Bolzenachse axial verschiebbar gelagert ist.

Als radial verschiebbare Elemente können Splinte vorgesehen sin, die beim Einführen einer Bolzenachse in ein Bolzenloch in Nuten der Bolzenachse versenkt sind, dort federnd gelagert sind und erst aus den Nuten austreten, wenn die Bolzenachse ihre Endposition erreicht hat.

In einer bevorzugten Ausführung der Erfindung umfasst die Giessmaschine mindestens einen Motor und Betätigungsmittel zum Betätigen der Giessanordnung, wobei der Motor und die Betätigungsmittel an dem Maschinenrahmen angeordnet sind, wobei der Tank und/oder die Giessanordnung einzeln oder der Tank und die Giessanordnung als Modul in einem Stück von dem Motor und den Betätigungsmitteln entfernbar sind.

Die in der Regel schwere Antriebstechnik kann also für Reinigungs- und Wartungszwecke an dem Maschinenrahmen verbleiben und muss nicht mit den Komponenten entfernt werden.

Die Steckverbindung ist universell einsetzbar, sie kann für Giessanordnungen mit jeglichen Giessmechanismen verwendet werden. Die Giessanordnung kann beispielsweise mindestens eine, insbesondere drehbare, Ausgabevorrichtung und mindestens einen, insbesondere horizontal angeordneten, Pumpkolben aufweisen, sie kann mindestens einen, insbesondere drehbaren und axial verschiebbaren, Dosier-Pumpzylinder aufweisen, der bevorzugt horizontal angeordnet ist. Sie kann auch mindestens eine vertikal angeordneten Pumpzylinder umfassen oder mindestens ein rotierendes Zahnwalzenpaar.

Ausserdem kann zu der Giessanordnung mindestens eine Ventilplatte gehören. Die Giessanordnung kann auch eine oder mehrere Düsenplatten aufweisen, mit welchen sich veränderliche Giessmuster herstellen lassen.

Die Giessanordnung kann ausserdem eine Verschlussplatte aufweisen, auf welcher Messer oder Schieber vorgesehen sind, mit welchen die Düsen verschlossen werden oder der austretende Massestrahl abgeschnitten wird, um ein Nachtropfen zu verhindern.

Die Giessanordnung kann ausserdem aus Giessanordnungsmodulen bestehen, die sich variabel zu Giessanordnungen mit jeweils unterschiedlichen Giessmustern und/oder unterschiedlichen Fördermengen zusammenstellen lassen.

In einer vorteilhaften Ausführung der Erfindung weist der Tank mindestens eine Rührvorrichtung auf, die insbesondere lösbar verbindbar mit einem Rührwerksmotor ist, der am Maschinenrahmen angeordnet ist.

Bei einem Entfernen des Tanks können die Betätigungsmittel für die Rührvorrichtung an dem Maschinenrahmen verbleiben.

Die Rührvorrichtung kann mit einer horizontal angeordneten oder einer vertikal angeordneten Welle ausgestattet sein.

Der Tank kann mehrere Rührvorrichtungen aufweisen und ausserdem in Abteile aufteilbar sein, so dass in einem Tank unterschiedliche Massen gehalten werden können, die erst beim Vergiessen zusammengeführt werden, um gefüllte, geschichtete, gemusterte und/oder marmorierte Lebensmittelprodukte herzustellen.

In einer vorzugsweisen Ausführung der Erfindung umfasst der Maschinenrahmen eine rückwärtige Platte, auf welcher der mindestens eine Bolzen und/oder das mindestens eine Bolzenloch vorgesehen ist und insbesondere auch Kupplungen zum Verbinden mindestens eines Motors, insbesondere des Motors zum Antreiben der Giessanordnung oder auch des Motors zum Antreiben einer Rührvorrichtung. Die Kupplungen können alternativ auf einem Gestell des Maschinenrahmens angeordnet sein. Eine Platte stellt allerdings gleichzeitig zu einer stabilen und definierten Halterung eine hygienisch vorteilhafte Trennung zwischen Maschinenteilen her, die (wie zum Beispiel die Motoren) einer Schmierung bedürfen und solchen Teilen, die mit der Lebensmittelmasse in Verbindung kommen.

An dem Maschinenrahmen können zum Beispiel im Bereich der Arme, weitere Betätigungsmittel vorgesehen sein, welche eine Kraft von einem Motor an die Giessanordnung, insbesondere auf horizontal angeordnete Kolben, übertragen. Bei diesen kann es sich beispielsweise um Zahnstangen, Zahnriemen oder Exzenter handeln. Diese Betätigungsmittel sind bevorzugt ebenfalls lösbar mit der Giessanordnung verbindbar und können bei einem Entfernen der Giessanordnung vom Maschinenrahmen am Maschinenrahmen verbleiben.

Die Komponente wird durch Bolzen und/oder das Bolzenloch, die an der rückwärtigen Platte angeordnet sind, sehr stabil gehalten. Bolzen und/oder Bolzenloch können alternativ auf einem Gestell des Maschinenrahmens angeordnet sein, beispielweise über Trägerelemente an den Armen angebracht sein.

Bevorzugt sind in einem von der Rückwand entfernt liegenden Bereich des Maschinenrahmens Bauteile angeordnet, welche in einen Bereich innerhalb des Rahmens hineinragen und vorstehende Elemente und/oder Ausnehmungen für eine Steckverbindung, insbesondere Bolzen und/oder Bolzenlöcher für eine Bolzenverbindung, aufweisen.

Die Komponente kann dann nicht nur am rückwärtigen Teil des Rahmens gehalten werden. Bevorzugt sind vorstehende Elemente und/oder Ausnehmungen für eine Steckverbindung so angeordnet, dass eine gleichmässige Lastenverteilung des Gewichts der Komponenten ermöglicht wird, beispielweise zwei Bolzenlöcher an der Rückwand, und zwei Bolzen im vorderen Bereich des Maschinenrahmens. Bevorzugt haben alle Bolzen und Bolzenlöcher dieselbe axiale Ausrichtung.

Zusätzlich können an dem Maschinenrahmen Führungen, insbesondere Rollen, angebracht sein, auf denen die mindestens eine Komponente, insbesondere der Tank und/oder die Giessanordnung einzeln oder der Tank und die Giessanordnung als Modul in einem Stück, führbar ist, wobei mindestens ein vorstehendes Element und eine korrespondierende Ausnehmung, insbesondere ein Bolzen und ein korrespondierendes Bolzenloch, zueinander bringbar sind.

Die Führungen sind derart ausgebildet, dass die Komponente bei vollständiger Errichtung der Steckverbindung, insbesondere vollständigem Formschluss, nicht auf der Führung aufliegt. Die Komponente wird im montierten Zustand nicht durch die Führungen gehalten, sondern durch die Steckverbindung.

Die Führungen müssen daher nicht so ausgelegt sein, dass sie die Kräfte aufnehmen, die auf die Komponente wirken, wenn die Giessmaschine in Betrieb ist. Die Führungen müssen ausserdem nicht so ausgelegt sein, dass eine präzise Endposition der Komponente gewährleistet wird. Die Führungen dienen vielmehr lediglich dazu, die Komponente von einer Trägervorrichtung, zum Beispiel einem Wagen, zu übernehmen und vorübergehend zu halten, bis die Steckverbindung hergestellt ist. Die Führungen können so gestaltet sein, dass eine Vorzentrierung der Komponente stattfindet, sodass korrespondierende vorstehende Elemente und Ausnehmungen der Steckverbindung bei einem Einschub der Komponente zueinander geführt werden.

Die Aufgabe wird ausserdem gelöst durch ein Verfahren zum Einsetzen eines Moduls in eine Giessmaschine wie oben beschrieben, wobei das Verfahren die folgenden Schritte umfasst.

Ein Modul wird derart vor den Maschinenrahmen geführt, dass sich das Modul im Bereich vorne zwischen den Armen des Maschinenrahmens befindet.

Dann erfolgt ein Einführen des Moduls in den Bereich zwischen den Armen derart, dass sich eine im Wesentlichen horizontale Steckverbindung, insbesondere eine Bolzenverbindung, zwischen dem Maschinenrahmen und dem weiteren Rahmen ausbildet. Ausserdem wird der Motor an die Ausgabevorrichtung angebunden und es werden die Kolben an die Betätigungsmittel angebunden. Die Aufgabe wird ausserdem gelöst durch ein Verfahren zum Einsetzen eines Tanks und/oder einer Giessanordnung oder eines Moduls, umfassend einen Tank und eine Giessanordnung, in einem Maschinenrahmen einer Giessmaschine, insbesondere eine Giessmaschine wie oben beschrieben, insbesondere ein Verfahren zum Einsetzen eins Moduls wie oben beschrieben, wobei das Verfahren folgende Schritte umfasst.

Mindestens eine Komponente, insbesondere ein Tank, eine Dosiervorrichtung und/oder ein Modul, umfassend einen Tank und eine Giessanordnung wird in den Maschinenrahmen eingeführt, wobei mindestens ein vorstehendes Element und eine korrespondierende Ausnehmung, insbesondere ein Bolzen und mindestens ein korrespondierendes Bolzenloch, die jeweils an der Komponente einerseits und dem Maschinenrahmen andererseits angebracht sind, zueinander gebracht werden.

Eine im Wesentlichen horizontale Steckverbindung, insbesondere eines Formschlusses zwischen Bolzen und Bolzenloch, wird hergestellt.

Die Steckverbindung kann durch eine zusätzliche Fixierungmassnahme, beispielsweise eine Verschraubung, arretiert werden.

Die Komponente wird bevorzugt in den Rahmen eingeschoben, dabei kann die Komponente zwischen Armen des Maschinenrahmens auf Führungen, insbesondere einer Rollenbahn, geführt werden, die insbesondere fest an dem Maschinenrahmen montiert sind.

Die Komponente wird vorteilhafterweise beim Ausbilden der Steckverbindung, insbesondere beim Ausbilden eines Formschlusses der Bolzenverbindung, von der Führung, insbesondere der Rollenbahn, abgehoben, sodass die Komponente im montierten Zustand insbesondere nur von der Steckverbindung gehalten wird.

Die Aufgabe wird ausserdem gelöst durch ein Verfahren zum Entfernen eines Moduls aus einer Giessmaschine wie oben beschrieben, wobei das Verfahren folgende Schritte umfasst.

Der Kolben wird von den Betätigungsmitteln und der Motor von der Ausgabevorrichtung getrennt.

Das Modul wird aus dem Bereich zwischen den Armen derart herausgeführt, dass sich eine im Wesentlichen horizontale Steckverbindung, insbesondere eine Bolzenverbindung, zwischen dem Maschinenrahmen und dem weiteren Rahmen löst.

Die Aufgabe wird ausserdem gelöst durch ein Verfahren zum Entfernen mindestens einer Komponente, insbesondere eines Tanks, einer Giessanordnung und/oder eines Moduls, umfassend einen Tank und eine Giessanordnung, von einem Maschinenrahmen einer Giessmaschine, insbesondere einer Giessmaschine wie oben beschrieben, insbesondere ein Verfahren zum Entfernen eines Moduls wie oben beschrieben, wobei das Verfahren folgende Schritte umfasst.

Zunächst erfolgt das Lösen einer im Wesentlichen horizontalen Steckverbindung, insbesondere das Lösen eines Formschlusses zwischen mindestens einem Bolzen und mindestens einem Bolzenloch, die jeweils an der Komponente einerseits und dem Maschinenrahmen andererseits angeordnet sind. Dies geschieht erfindungsgemäß durch gegenseitige axiale Verschiebung, insbesondere in im Wesentlichen horizontaler Richtung.

Die Komponente wird relativ zum Maschinenrahmen verschoben, wobei ein vorstehendes Bauteil und eine korrespondierende Ausnehmung, insbesondere ein Bolzen und ein Bolzenloch, voneinander entfernt werden.

Das Entfernen der Komponente umfasst mindestens einen der folgenden weiteren Schritte: Trennen der Giessanordnung von Betätigungsmitteln und/oder von einem Motor, Trennen einer Rührvorrichtung von einem Motor, Absenken der Komponente auf eine Führung, insbesondere eine Rollenbahn; horizontales Verschieben der Komponente auf einer Führung, insbesondere einer Rollenbahn; Übernahme der Komponente durch eine Trägervorrichtung.

Die Aufgabe wird ausserdem gelöst durch einen Bausatz gemäß Anspruch 15, zum Umrüsten einer Giessmaschine mit einem Maschinenrahmen, einer Giessanordnung zum Austragen der Lebensmittelmasse aus der Giessmaschine, die bevorzugt unterhalb eines Tanks angeordnet ist, mindestens einem Tank zum Zuführen der Lebensmittelmasse zu der Giessanordnung, wobei der Tank, die Giessanordnung und/oder ein Modul, umfassend einen Tank und eine Giessanordnung, von dem Maschinenrahmen entfernbar sind.

Der Bausatz zum Umrüsten umfasst mindestens ein erstes Trägerteil, das an einer der Komponenten, insbesondere dem Tank, der Giessanordnung und/oder dem Modul, befestigbar ist, und mindestens ein zweites Trägerteil, das an dem Maschinenrahmen befestigbar ist.

An dem ersten Trägerteil und an dem zweiten Trägerteil sind jeweils mindestens ein vorstehendes Bauteil und/oder mindestens eine Ausnehmung, insbesondere ein Bolzen und/oder ein Bolzenloch, angeordnet. Zwischen dem ersten und dem zweiten Trägerteil ist eine Steckverbindung, insbesondere eine formschlüssige Bolzenverbindung, herstellbar.

Die Trägerteile sind bevorzugt so an der Komponente und dem Maschinenrahmen befestigbar, dass eine horizontale Steckverbindung herstellbar ist.

Die Erfindung ist im Folgenden in Ausführungsbeispielen anhand von Zeichnungen erläutert.

Es zeigen:
- Figur 1: eine erfindungsgemässe Giessmaschine im montierten Zustand in einer schematischen Schnittdarstellung quer zur Einschubrichtung;
- Figur 2: eine Detailansicht von Ausschnitt T aus Figur 1;
- Figur 3: die erfindungsgemässe Giessmaschine mit der Komponente in einer ersten Position in einer schematischen Schnittdarstellung längs der Einschubrichtung;
- Figur 4: die erfindungsgemässe Giessmaschine mit der Komponente in einer zweiten Position in schematischen Schnittdarstellung längs der Einschubrichtung;
- Figur 5: die erfindungsgemässe Giessmaschine mit der Komponente in einer dritten Position in schematischen Schnittdarstellung längs der Einschubrichtung;
- Figur 6: eine Detailansicht von Ausschnitt X aus Figur 4;
- Figur 7: eine Detailansicht von Ausschnitt W aus Figur 4;
- Figur 8: eine Detailansicht von Ausschnitt V aus Figur 5;
- Figur 9: eine Detailansicht von Ausschnitt U aus Figur 5;
- Figur 10: ein erstes Beispiel für eine Giessanordnung in einer schematischen Schnittdarstellung;
- Figur 11: ein zweites Beispiel für eine Giessanordnung in einer schematischen Schnittdarstellung;
- Figur 12: ein drittes Beispiel für ein Modul in einer schematischen Schnittdarstellung;
- Figur 13: ein viertes Beispiel für eine Modul in einer schematischen Schnittdarstellung;
- Figur 14: ein fünftes Beispiel für eine Giessanordnung in einer schematischen Schnittdarstellung.

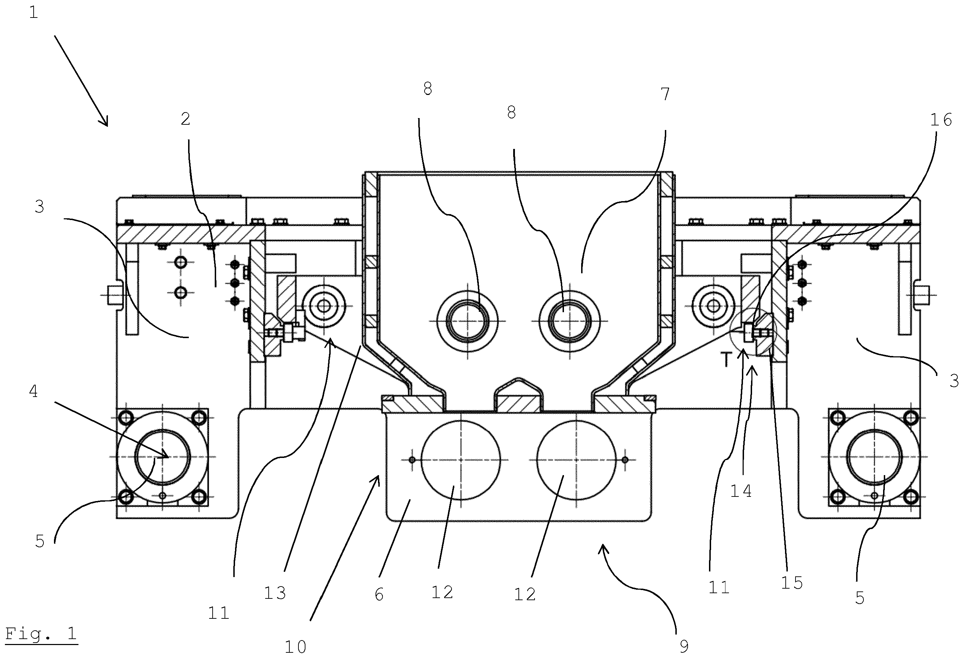

Figur 1 zeigt eine Giessmaschine 1 im montierten Zustand in einer schematischen Schnittdarstellung.

Die Giessmaschine 1 weist einen Maschinenrahmen 2 auf, der mindestens einen nicht explizit gezeigten Motor trägt und zwei Arme 3 umfasst, die entlang jeweiliger paralleler horizontaler Achsen 4 vorstehen und mit Betätigungsmitteln 5 ausgerüstet sind.

Die Giessmaschine 1 weist eine Giessanordnung 6 zum Austragen der Lebensmittelmasse aus der Giessmaschine 1 auf, die bevorzugt unterhalb eines Tanks 7 angeordnet ist.

Der Tank 7 ist mit einer Rührvorrichtung 8 ausgestattet.

Der Tank 7 und die Giessanordnung 6 bilden im vorliegenden Ausführungsbeispiel Teil eines Moduls 9, das als Komponente 10 der Giessmaschine 1 in einem Stück von dem Rahmen 2 entfernbar ist.

Die Komponente 10 ist mittels einer im Wesentlichen horizontal angeordneten Steckverbindung 11 an dem Maschinenrahmen 2 befestigt.

Das Modul 9 ist mit einem weiteren Rahmen 13 ausgestattet, der im vorliegenden Beispiel über eine formschlüssige Bolzenverbindung an dem Maschinenrahmen 2 befestigt ist.

Die Giessanordnung 6 umfasst auf beiden den Armen 3 zuweisenden Seiten eine Reihe von nicht explizit dargestellten horizontalen Kolben, die einen Ansaugtakt, um Produkt von dem Tank zu ziehen, und einen Ausstoßtakt, um das eingezogene Produkt auszustossen, durchführen. Die Giessanordnung 6 umfasst ausserdem auf beiden Seite je eine Ausgabevorrichtung 12, die sich zwischen einer ersten Position, um das durch die Kolben eingezogene Produkt aufzunehmen, und einer zweiten Position, die ein Abfliessen des durch die Kolben ausgestossenen Produkts ermöglicht, dreht.

Die Giessanordnung 6 ist lösbar mit einem auf dem Maschinenrahmen 2 angebrachten Motor zum Drehen der Ausgabevorrichtung 12 verbunden. Ebenso sind die Betätigungsmittel zum Bewegen der Kolben lösbar mit den Kolben verbunden.

An dem Maschinenrahmen 2 sind Führungen 14, im vorliegenden Fall Leisten 15 mit Rollen 16, angebracht.

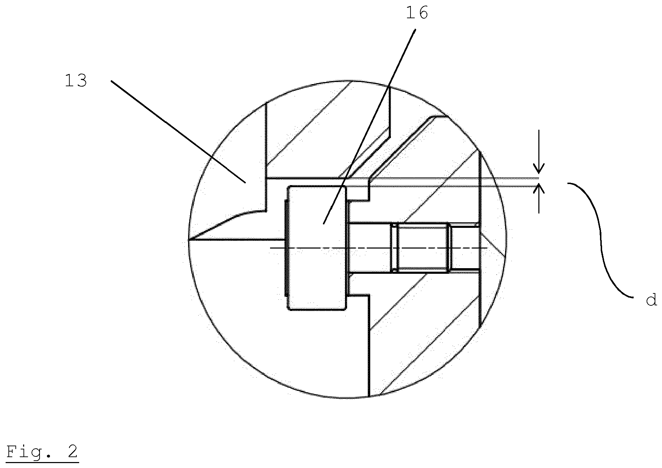

In Figur 2 ist ersichtlich, dass die Komponente 10 bei im montierten Zustand, also bei vollständiger Errichtung der Steckverbindung 11, nicht auf der Führung 14 aufliegt, sondern zwischen dem Rahmen 13 des Moduls 9 und den Rollen 16 ein Abstand d besteht.

Die Rollen 16 brauchen also das Modul 9 während des Gebrauchs nicht zu tragen.

Das Einführen des Moduls 9 in den Maschinenrahmen 2 ist anhand der nachfolgenden Abbildungen gezeigt.

In einem ersten Schritt wird das Modul 9 derart vor dem Maschinenrahmen positioniert, dass sich das Modul 9 im Bereich vorne zwischen den Armen 3 des Maschinenrahmens 3 befindet. Das Modul 9 kann dann in den Bereich zwischen den Armen 3 geführt werden. Die Positionierung kann mit einer nicht explizit gezeigten Tragevorrichtung, beispielsweise einem Hubwagen erfolgen.

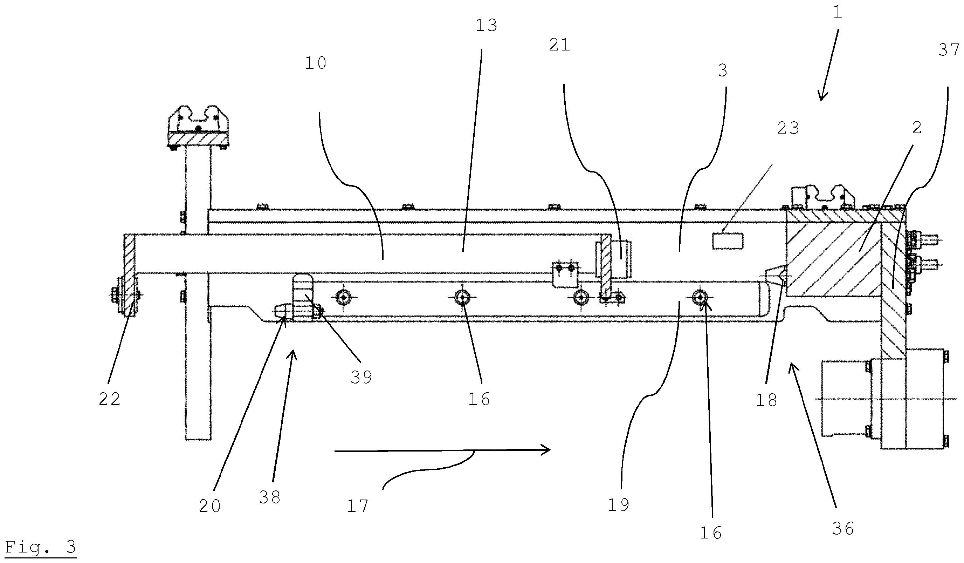

Figur 3 zeigt die erfindungsgemässe Giessmaschine 1 in einer schematischen Schnittdarstellung längs der Einschubrichtung 17, wobei sich die Komponente 10 in einer ersten Position zwischen den Armen 3 des Maschinenrahmens 2 befindet.

An dem Maschinenrahmen 2 sind im hinteren Bereich 36 Bolzen 18 als vorstehende Elemente 28 für eine Steckverbindung 11 angebracht. Die Bolzen 18 sind als konisch geformte Zentrierbolzen ausgeführt.

Der Maschinenrahmen 2 umfasst eine rückwärtige Platte 37, an welcher Bolzen 18 vorgesehen sind. Ausserdem sind an der rückwärtigen Platte 37 nicht explizit dargestellte Kupplungen zum Verbinden mindestens eines Motors vorgesehen.

In einem von der rückwärtigen Platte 37 entfernt liegenden Bereich 38 des Maschinenrahmens 2 sind Bauteile 39 angeordnet, welche in den Rahmen 2 hineinragen und ebenfalls Bolzen 20 aufweisen.

An den Armen 3 sind Rollenbahnen 19 mit Rollen 16 vorgesehen, an deren vorderen Ende ebenfalls Bolzen 20 angeordnet sind.

An dem Rahmen 13 des Moduls 9 sind korrespondierende hintere Bolzenlöcher 21 und vordere Bolzenlöcher 22 als Ausnehmungen 29 für eine Steckverbindung angeordnet.

Die Komponente 10 kann bis zu einem an dem Maschinenrahmen vorgesehenen Anschlag 23 in den Rahmen eingeschoben werden, wird dann auf die Rollenbahn 19 abgesenkt und auf den Rollen 16 in Einschubrichtung 16 weitergeschoben, sodass Bolzen 18, 20 und korrespondierende Bolzenlöcher 21, 22 zueinander gebracht werden.

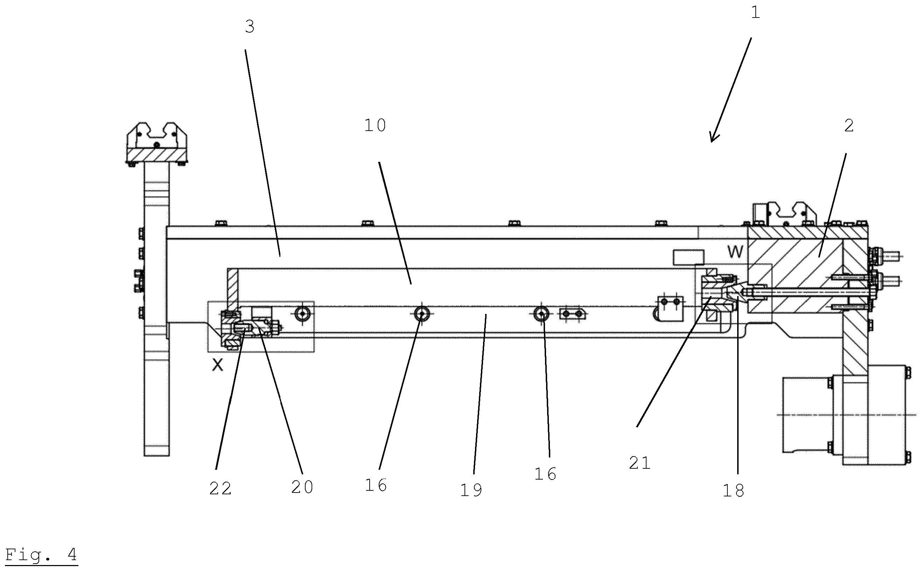

Figur 4 zeigt die erfindungsgemässe Giessmaschine 1 in einer schematischen Schnittdarstellung längs der Einschubrichtung 17, wobei sich die Komponente 10 in einer zweiten Position zwischen den Armen 3 des Maschinenrahmens 2 befindet, wobei Bolzen 18, 20 und korrespondierende Bolzenlöcher 21, 22 miteinander in Kontakt gebracht sind, aber noch keine formschlüssige Verbindung hergestellt ist.

Das Modul 10 liegt noch auf den Rollen 16 der Rollenbahn 19 auf.

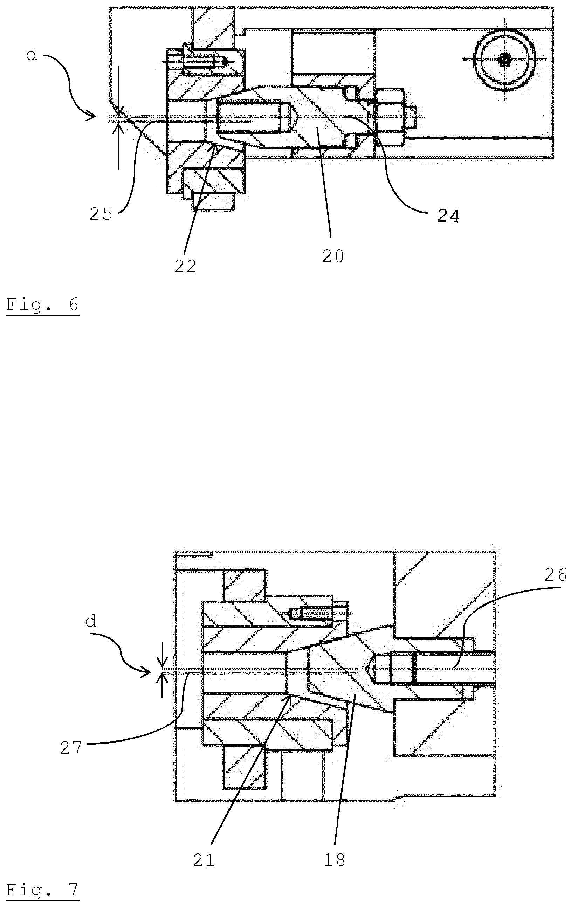

Aus den Figuren 6 und 7 ist ersichtlich, dass zwischen der Achse 24 des vorderen Zentrierbolzens 20 und der Achse 25 des vorderen Bolzenlochs 22, sowie zwischen der Achse 26 des hinteren Bolzens 18 und der Achse 27 des hinteren Bolzenlochs 21 ein Abstand d besteht.

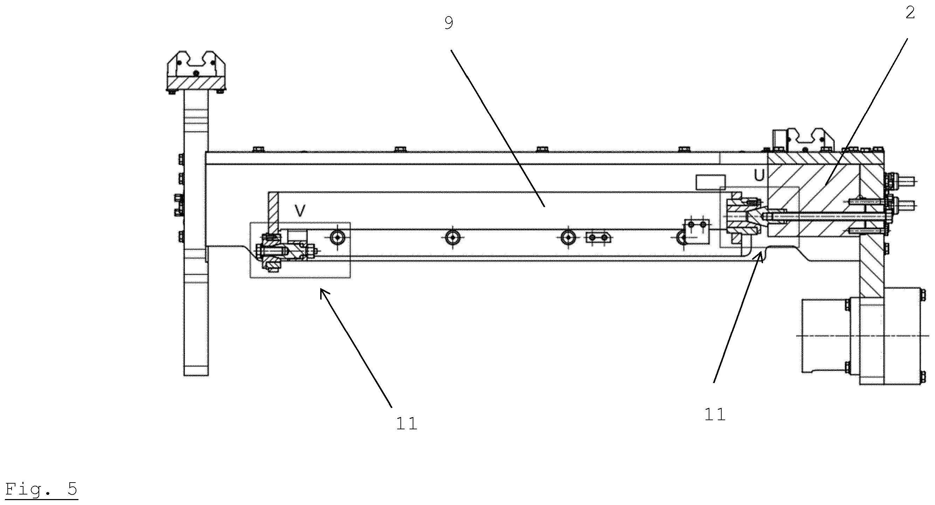

Die Bolzen 18, 20 sind konisch ausgeführt, sodass bei einem weitern Heranschieben des Moduls 9 in Einschubrichtung das Modul 9 unweigerlich in seine Endposition gezogen wird, die in Figur 5 dargestellt ist.

In der in Figur 3 dargestellten dritten Position ist eine im Wesentlichen horizontale Steckverbindung 11 zwischen dem Maschinenrahmen 2 und dem Rahmen 13 des Moduls 9 ausgebildet, wobei ein Formschluss zwischen je einem Bolzen 18, 20 und einem korrespondierenden Bolzenloch 21, 22 hergestellt ist.

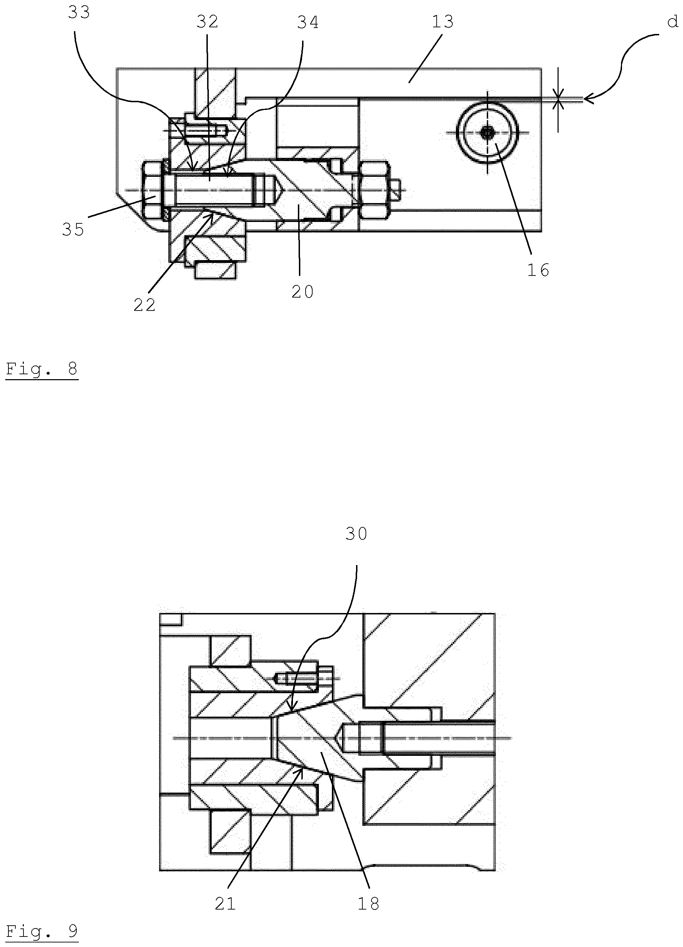

In Figur 8 ist ersichtlich, dass der Rahmen 13 des Moduls 9 von den Rollen 16 einen Abstand d hat.

Die hinteren Bolzenlöcher 21 sind als Sackloch 30 ausgeführt.

Die vorderen Bolzenlöcher 22 weisen eine Öffnung 31 für ein Befestigungselement 32 auf. Im vorliegenden Fall sind die vorderen Bolzen 20 und die korrespondierenden Bolzenlöcher 22 jeweils mit axialen Gewindebohrungen 33, 34 versehen, so dass die vollständige Ausbildung des Formschlusses durch die Fixierung einer Schraube 35, welche längs durch die Bolzen 20 geführt ist, erreicht wird.

Es sind nun noch die Kolben an die Betätigungsmitteln und der Motor an die Ausgabevorrichtung anzubinden.

Die folgenden Abbildungen zeigen Beispiele für unterschiedliche Dosiermechanismen, wobei Komponenten oder ein Modul mit einer Steckverbindung an einem Maschinenrahmen befestigbar ist.

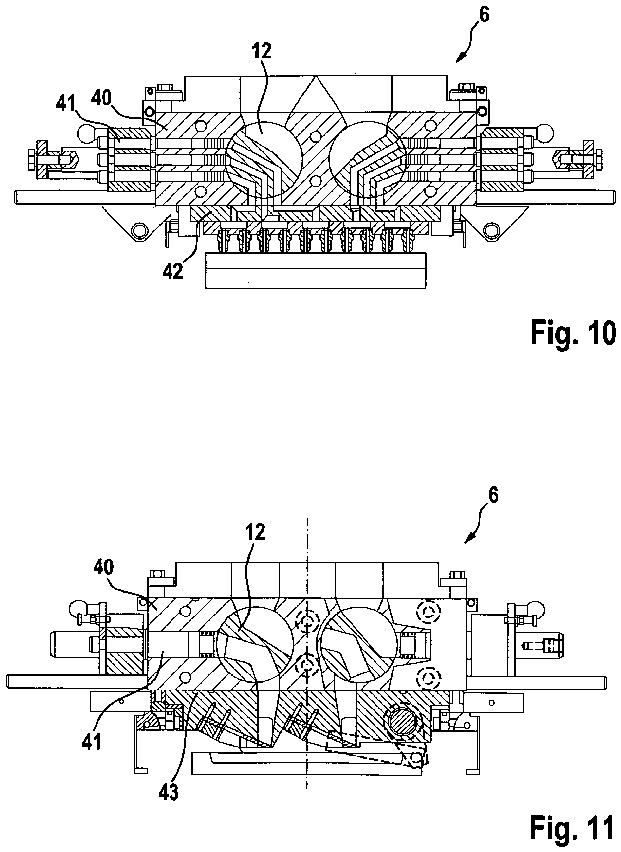

Figur 10 zeigt eine Giessanordnung 6 mit einem doppelseitigen Kolbensystem. In einem Kolbenblock 40 sind zum einen drehbare Ausgabevorrichtungen 12, zum anderen horizontale Kolben 41 angeordnet. Die Kolben 41 sind bevorzugt endseitig mit einer Kolbenplatte verbunden, sodass die Kolben gemeinsam, zum Beispiel von von einer Zahnstange oder einem Exzenter hin und her bewegt werden können. Für eine Entnahme muss die Kolbenplatte von den Antriebsmitteln und die Ausgabevorrichtung vom Motor getrennt werden.

Unterhalb der Giessanordnung 6 ist eine Düsenplatte 42 vorgesehen.

Figur 11 zeigt ebenfalls eine Giessanordnung 6 mit einem Kolbenblock 40, in dem eine drehbare Ausgabevorrichtungen 12 und horizontale Kolben 41 angeordnet sind. Unterhalb der Giessanordnung ist ein Messerblock 43 angeordnet, mit welchem Massen, die stückige Bestandteile enthalten, sauber dosiert werden können.

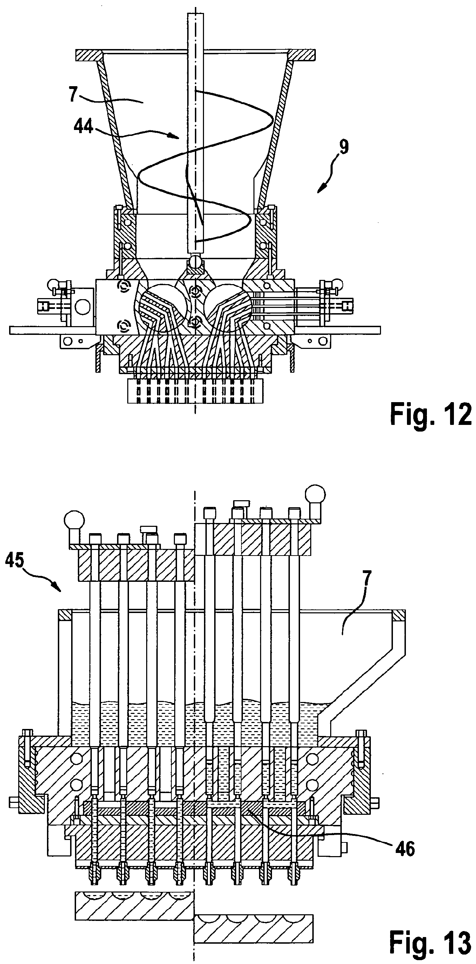

Figur 12 zeigt ein Modul 9 mit einem Tank 7, der als konischer Massebehälter ausgeführt ist, und in welchem eine vertikal ausgerichtete Rührvorrichtung 44 mit einer Förderschnecke vorgesehen ist. Derartige Module eigenen sich zum Fördern von zähen Massen, beispielweise von Marzipanmassen.

Figur 13 zeigt ein Modul 9 mit einem Tank 7, in welchem vertikale Dosierkolben 45 angeordnet sind. Ein Schieber 46, der beispielweise von einem Servomotor bewegt wird, kann in eine Dosierposition (linke Seite) gebracht werden oder in eine Ansaugposition (rechte Seite), in welcher keine Masse durch die Düsen tritt.

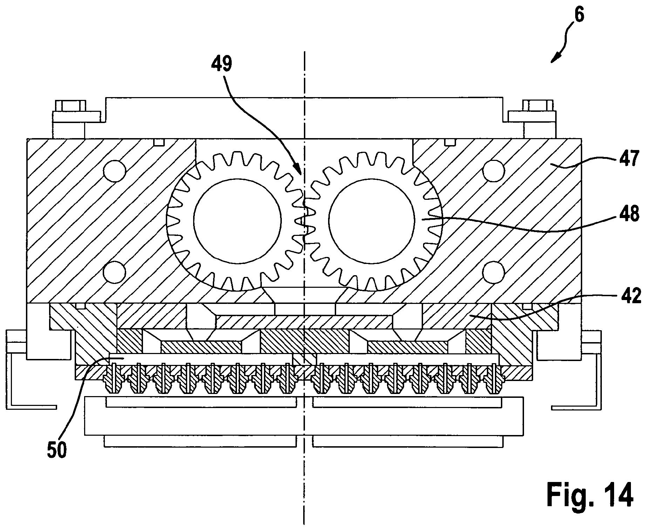

Figur 14 zeigt eine Giessanordnung 6 mit einem Dosierblock 47, in welchem Zahnräder 48 als Zahnwalzenpaar 49 angeordnet sind. Unterhalb der Giessanordnung ist eine Düsenplatte 42 mit Verteilerkanälen 50 angeordnet.

## Patentansprüche

1. Giessmaschine zum Vergiessen von Lebensmittelmasse, insbesondere Fettmasse, mit
- einem Maschinenrahmen (2) umfassend Arme,
- einer Giessanordnung (6) zum Austragen der Lebensmittelmasse aus der Giessmaschine (1), die eine Vielzahl von Düsen umfasst und die bevorzugt unterhalb eines Tanks (7) angeordnet ist,
- mindestens einem Tank (7) zum Zuführen der Lebensmittelmasse zu der Giessanordnung (6),
wobei mindestens eine Komponente (10) der Giessmaschine (1), nämlich der Tank (7), die Giessanordnung (6) und/oder ein Modul (9), umfassend einen Tank (7) und eine Giessanordnung (6), von dem Maschinenrahmen (2) entfernbar ist, **dadurch gekennzeichnet, dass** mindestens eine Komponente (10) mittels einer im Wesentlichen horizontal angeordneten Steckverbindung (11), insbesondere einer Bolzenverbindung, an dem Maschinenrahmen (2) befestigt ist, wobei die Steckverbindung entlang einer Achse ausgerichtet ist, die parallel zu den Achsen der Arme des Maschinenrahmens verläuft, wobei die Steckverbindung durch eine gegenseitige axiale Verschiebung von Komponente und Maschinenrahmen lösbar ist.

2. Giessmaschine (1) gemäss Anspruch 1, umfassend
- mindestens einen Tank (7), der ein Produkt zum Giessen enthält und mit einer Rührvorrichtung (8) ausgestattet ist, um das Produkt darin zu rühren;
- eine Giessanordnung (6), die unterhalb des Tanks (7) lokalisiert ist und umfasst:
a. mindestens eine Reihe von horizontalen Kolben, die
- einen Ansaugtakt, um Produkt von dem Tank zu ziehen, und
- einen Ausstosstakt, um das eingezogene Produkt auszustossen,
durchführen; und
b. mindestens eine Ausgabevorrichtung (12), die sich zwischen
- einer ersten Position, um das durch die die Kolben eingezogene Produkt aufzunehmen, und
- einer zweiten Position, die ein Abfliessen des durch die Kolben ausgestossenen Produkts ermöglicht,
dreht;
- einen Motor zum Drehen der Ausgabevorrichtung (12);
- Betätigungsmittel (5), um die Kolben hin und her zu bewegen; wobei die Betätigungsmittel (5) lösbar mit den Kolben verbunden sind; und
- einen Maschinenrahmen (2), der den Motor trägt und zwei Arme (3) umfasst, die entlang jeweiliger paralleler horizontaler Achsen (4) vorstehen und mit den Betätigungsmitteln (5) ausgerüstet sind; wobei
- der Tank (7) und die Giessanordnung (6) Teil eines Moduls (9) bilden, das in einem Stück von dem Rahmen (2) entfernbar ist; und wobei
- das Modul (9) lösbar mit dem Motor verbunden ist und mit einem weiteren Rahmen (13) ausgestattet ist,
und wobei der weitere Rahmen (13) in dem Maschinenrahmen (2) über eine im Wesentlichen horizontal angeordnete formschlüssige Bolzenverbindung (11), wobei die Steckverbindung entlang einer Achse ausgerichtet ist, die parallel zu den Achsen der Armen des Maschinenrahmens verläuft, befestigt ist.

3. Giessmaschine gemäss Anspruch 1 oder 2, **dadurch gekennzeichnet, dass** die Steckverbindung (11) einerseits mindestens ein Bolzenloch (21, 22), insbesondere ein Sackloch (30) oder eine Durchdringung, und andererseits mindestens einen im montierten Zustand darin angeordneten Bolzen (18, 20) umfasst.

4. Giessmaschine gemäss einem der Ansprüche 1 oder 2, **dadurch gekennzeichnet, dass** eine Bolzenverbindung durch
- mindestens einen an der Komponente (10) angeordneten Bolzen (18, 20) und/oder mindestens ein an der Komponente (10) angeordnetes Bolzenloch (21, 22) einerseits, und
- mindestens ein an dem Maschinenrahmen (2) angeordnetes Bolzenloch (21, 22) und/oder mindestens einem an dem Maschinenrahmen (2) angeordneten Bolzen (18, 20) andererseits
ausgebildet ist, wobei der Bolzen (18, 20) und das Bolzenloch (21, 22) so angeordnet sind, dass sie im montierten Zustand zusammenwirken, insbesondere einen Formschluss bilden, und die Komponente (10) im Maschinenrahmen (2) halten.

5. Giessmaschine gemäss einem der Ansprüche 1 bis 4, **dadurch gekennzeichnet, dass** die Giessmaschine (1) mindestens einen Motor und Betätigungsmittel (5) zum Betätigen der Giessanordnung (6) umfasst, wobei der Motor und die Betätigungsmittel (5) an dem Maschinenrahmen (2) angeordnet sind, wobei der Tank (7) und/oder die Giessanordnung (6) einzeln oder der Tank (7) und die Giessanordnung (6) als Modul (9) in einem Stück von dem Motor und den Betätigungsmitteln (5) entfernbar sind.

6. Giessmaschine gemäss einem der Ansprüche 1 bis 5, **dadurch gekennzeichnet, dass** der Maschinenrahmen (2) eine rückwärtige Platte (37) umfasst, auf welcher der mindestens eine Bolzen (18, 20) und/oder das mindestens ein Bolzenloch (21, 22) vorgesehen ist und insbesondere auch Kupplungen zum Verbinden mindestens eines Motors.

7. Giessmaschine gemäss einem der Ansprüche 1 bis 6, **dadurch gekennzeichnet, dass** in einem von einer Rückwand (37) entfernt liegenden Bereich (38) des Maschinenrahmens (2) Bauteile (39) angeordnet sind, welche in den Maschinenrahmen (2) hineinragen und vorstehende Elemente (28) und/oder Ausnehmungen (29) für eine Steckverbindung (11), insbesondere Bolzen (18, 20) und/oder Bolzenlöcher (21, 22) für eine Bolzenverbindung, aufweisen.

8. Giessmaschine gemäss einem der Ansprüche 1 bis 7, **dadurch gekennzeichnet, dass** an dem Maschinenrahmen (2) Führungen (14), insbesondere Rollen (16), angebracht sind, auf denen die mindestens eine Komponente (10), insbesondere der Tank (7) und/oder die Giessanordnung (6) einzeln oder der Tank (7) und die Giessanordnung (6) als Modul (9) führbar ist, wobei mindestens ein vorstehendes Element (28) und eine korrespondierende Ausnehmung (29), insbesondere ein Bolzen (18, 20) und ein korrespondierendes Bolzenloch (21, 22), zueinander bringbar sind, und die Führungen (14) derart ausgebildet sind, dass die Komponente (10) bei vollständiger Errichtung der Steckverbindung (11), insbesondere vollständigem Formschluss, nicht auf der Führung (14) aufliegt.

9. Verfahren zum Einsetzen einer Komponente, nämlich eines Tanks (7), einer Giessanordnung (6), die eine Vielzahl von Düsen umfasst, und/oder eines Moduls (9) umfassend einen Tank (7) und eine Giessanordnung (6), die eine Vielzahl von Düsen umfasst, in einen Maschinenrahmen (2) einer Giessmaschine (1) umfassend Arme, insbesondere einer Giessmaschine gemäss einem der Ansprüche 1 bis 8, wobei das Verfahren folgende Schritte umfasst:
- Einführen mindestens der Komponente (10) in den Maschinenrahmen (2), wobei mindestens ein vorstehendes Element (28) und eine korrespondierende Ausnehmung (29), insbesondere ein Bolzen (18, 20) und mindestens ein korrespondierendes Bolzenloch, die jeweils an der Komponente einerseits und dem Maschinenrahmen andererseits angebracht sind, zueinander gebracht werden;
- Herstellen einer im Wesentlichen horizontalen Steckverbindung, insbesondere eines Formschlusses zwischen Bolzen (18, 20) und Bolzenloch (21, 22), wobei die Steckverbindung entlang einer Achse ausgerichtet ist, die parallel zu den Achsen der Armen des Maschinenrahmens verläuft, wobei die Steckverbindung durch eine gegenseitige axiale Verschiebung von Komponente und Maschinenrahmen lösbar ist.

10. Verfahren gemäss Anspruch 9 mit den folgenden Schritte:
- Heranführen eines Moduls (9) vor einen Maschinenrahmen derart, dass sich das Modul im Bereich vorne zwischen Armen (3) des Maschinenrahmens (2) befindet;
- Einführen des Moduls (9) in den Bereich zwischen den Armen (3) derart, dass sich eine im Wesentlichen horizontale Steckverbindung (11), insbesondere eine Bolzenverbindung, zwischen dem Maschinenrahmen (2) und einem weiteren Rahmen (13) des Moduls (9) ausbildet, wobei die Steckverbindung entlang einer Achse ausgerichtet ist, die parallel zu den Achsen der Armen des Maschinenrahmens verläuft;
- Anbindung von Kolben des Moduls an Betätigungsmittel (5) ;
- Anbindung eines Motors an eine Ausgabevorrichtung (12) .

11. Verfahren gemäss Anspruch 9 oder 10, **dadurch gekennzeichnet, dass** die Komponente (10), insbesondere das Modul (9), zwischen Armen (3) des Maschinenrahmens (2) auf Führungen (14), insbesondere einer Rollenbahn (19), geführt wird.

12. Verfahren gemäss Anspruch 11, **dadurch gekennzeichnet, dass** die Komponente beim Ausbilden der Steckverbindung (11), insbesondere beim Ausbilden eines Formschlusses der Bolzenverbindung, von der Führung (14), insbesondere der Rollenbahn (19), abgehoben wird.

13. Verfahren zum Entfernen mindestens einer Komponente, nämlich eines Tanks (7), einer Giessanordnung (6), die eine Vielzahl von Düsen umfasst, und/oder eines Moduls umfassend einen Tank (7) und eine Giessanordnung (6), die eine Vielzahl von Düsen umfasst, von einem Maschinenrahmen (2) einer Giessmaschine (1), wobei der Maschinerahmen Arme umfasst, insbesondere gemäss einem der Ansprüche 1 bis 8, wobei das Verfahren folgende Schritte umfasst:
- Lösen einer im Wesentlichen horizontalen Steckverbindung, wobei die Steckverbindung entlang einer Achse ausgerichtet ist, die parallel zu den Achsen von Armen des Maschinenrahmens verläuft, insbesondere Lösen eines Formschlusses zwischen mindestens einem vorstehenden Bauteil, insbesondere einem Bolzen (18, 20), und mindestens einer korrespondierenden Ausnehmung, insbesondere einem Bolzenloch (21, 22), die jeweils an der Komponente einerseits und dem Maschinenrahmen (2) andererseits angeordnet sind, durch gegenseitige axiale Verschiebung von Komponente und Maschinenrahmen,
- Verschieben der Komponente relativ zum Maschinenrahmen (2), wobei vorstehendes Bauteil und korrespondierende Ausnehmung, insbesondere Bolzen (18, 20) und Bolzenloch (21, 22), voneinander entfernt werden.

14. Verfahren gemäss Anspruch 13, wobei das Verfahren mindestens einen der folgenden weiteren Schritte umfasst:
- Trennen der Giessanordnung von Betätigungsmitteln (5) und/oder von einem Motor,
- Trennen einer Rührvorrichtung (8) von einem Motor,
- Absenken der Komponente auf eine Führung (14), insbesondere eine Rollenbahn (19),
- horizontales Verschieben der Komponente (10) auf einer Führung (14), insbesondere einer Rollenbahn (19),
- Übernahme der Komponente (10) durch eine Trägervorrichtung.

15. Bausatz zum Umrüsten einer Giessmaschine, die einen Maschinenrahmen (2) mit Armen, eine Giessanordnung (6) zum Austragen der Lebensmittelmasse aus der Giessmaschine, die eine Vielzahl von Düsen umfasst und die bevorzugt unterhalb eines Tanks (7) angeordnet ist, und mindestens einen Tank (7) zum Zuführen der Lebensmittelmasse zu der Giessanordnung umfasst, wobei eine Komponente, nämlich der Tank (7), die Giessanordnung (6) und/oder ein Modul (9), umfassend einen Tank (7) und eine Giessanordnung (6), von dem Maschinenrahmen (2) entfernbar sind,
**dadurch gekennzeichnet, dass** der Bausatz zum Umrüsten
- mindestens ein erstes Trägerteil, das an einer Komponenten, insbesondere dem Tank (7), der Giessanordnung (6) und/oder dem Modul (9), befestigbar ist; und
- mindestens ein zweites Trägerteil, das an dem Maschinenrahmen (2) befestigbar ist,
umfasst, wobei an dem ersten Trägerteil und an dem zweiten Trägerteil jeweils mindestens ein vorstehendes Bauteil (28) und/oder mindestens eine Ausnehmung (29), insbesondere ein Bolzen (18, 20) und/oder ein Bolzenloch (21, 22), angeordnet ist, und wobei zwischen dem ersten und dem zweiten Trägerteil eine Steckverbindung (11), insbesondere eine formschlüssige Bolzenverbindung, herstellbar ist, wobei die Steckverbindung entlang einer Achse ausgerichtet ist, die parallel zu den Achsen der Arme des Maschinenrahmens verläuft, und die durch eine gegenseitige axiale Verschiebung von Komponente und Maschinenrahmen lösbar ist.

## Claims

1. A depositing machine for depositing a foodstuff mass, in particular a fatty mass, with
- a machine frame (2) comprising arms,
- a depositing assembly (6), preferably disposed below a tank (7), for delivering the foodstuff mass from the depositing machine (1), comprising a multiplicity of nozzles,
- at least one tank (7) for supplying the foodstuff mass to the depositing assembly (6),
wherein at least one component (10) of the depositing machine (1), namely the tank (7), the depositing assembly (6), and/or a module (9) comprising a tank (7) and a depositing assembly (6), is removable from the machine frame (2), **characterized in that** at least one component (10) is fastened to the machine frame (2) by way of a plug-in connection (11), in particular a bolt connection, which is disposed in a substantially horizontal manner, wherein the plug-in connection (11) is aligned along an axis which runs parallel with the axes of the arms of the frame, wherein the plug-in connection (11) is releasable by mutual axial displacement of the component and of the machine frame.

2. The depositing machine (1) as claimed in claim 1 having:
- at least one tank (7) which contains a product for depositing and which is equipped with a stirring device (8) for stirring the product in said tank (7);
- a depositing assembly (6) which is located below the tank (7) and comprises:
a. at least one row of horizontal pistons which perform:
- an intake cycle, so as to draw product from the tank, and
- an exhaust cycle, so as to expel the acquired product; and
b. at least one dispensing device (12) which rotates between
- a first position, so as to receive the product that has been acquired by the pistons, and
- a second position which enables an outflow of the product that is expelled by the pistons;
- a motor for rotating the dispensing device (12);
- actuation means (5) for moving the pistons in a reciprocal manner, wherein the actuation means (5) are releasably connected to the pistons; and
- a machine frame (2) which carries the motor and comprises two arms (3) which project along respective parallel horizontal axes (4) and are equipped with the actuation means (5); wherein
- the tank (7) and the depositing assembly (6) form part of a module (9) which is removable in one piece from the frame (2); and wherein
- the module (9) is releasably connected to the motor and is equipped with a further frame (13),
and wherein the further frame (13) in the machine frame (2) is fastened by way of a form-fitting bolt connection (11) which is disposed in a substantially horizontal manner, wherein the plug-in connection (11) is aligned along an axis which runs parallel with the axes of the arms of the frame.

3. The depositing machine as claimed in claim 1 or 2, **characterized in that** the plug-in connection (11) comprises at least one bolt hole (21, 22), in particular a blind hole (30) or a through hole, on the one hand, and at least one bolt (18, 20) which in the fitted state is disposed in the latter, on the other hand.

4. The depositing machine as claimed in one of claims 1 or 2, **characterized in that** a bolt connection is configured by
- at least one bolt (18, 20) which is disposed on the component (10), and/or at least one bolt hole (21, 22) which is disposed on the component (10), on the one hand, and
- at least one bolt hole (21, 22) which is disposed on the machine frame (2), and/or at least one bolt (18, 20) which is disposed on the machine frame (2), on the other hand;
wherein the bolt (18, 20) and the bolt hole (21, 22) are disposed such that they interact, in particular form a form-fit, in the fitted state and hold the component (10) in the machine frame (2) .

5. The depositing machine as claimed in one of claims 1 to 4, **characterized in that** the depositing machine (1) comprises at least one motor and actuation means (5) for actuating the depositing assembly (6), wherein the motor and the actuation means (5) are disposed on the machine frame (2), wherein the tank (7) and/or the depositing assembly (6) individually, or the tank (7) and the depositing assembly (6) as a module (9) in one piece is/are removable from the motor and the actuation means (5).

6. The depositing machine as claimed in one of claims 1 to 5, **characterized in that** the machine frame (2) comprises a rear plate (37) on which the at least one bolt (18, 20) and/or the at least one bolt hole (21, 22), and in particular also couplings for connecting at least one motor, are provided.

7. The depositing machine as claimed in one of claims 1 to 6, **characterized in that** members (39) which protrude into the machine frame (2) and have projecting elements (28) and/or clearances (29) for a plug-in connection (11), in particular bolts (18, 20) and/or bolt holes (21, 22) for a bolt connection, are disposed in a region (38) of the machine frame (2) that is remote from a rear wall (37) .

8. The depositing machine as claimed in one of claims 1 to 7, **characterized in that** guides (14), in particular rollers (16), on which the at least one component (10), in particular the tank (7) and/or the depositing assembly (6) individually, or the tank (7) and the depositing assembly (6) as a module (9), is/are guidable, are attached to the machine frame (2), wherein at least one projecting element (28) and one corresponding clearance (29), in particular a bolt (18, 20) and a corresponding bolt hole (21, 22), are convergeable, and the guides (14) are configured in such a manner that the component (10) upon complete establishment of the plug-in connection (11), in particular in the case of a complete form-fit, does not bear on the guide (14).

9. A method for inserting a component, namely a tank (7), a depositing assembly (6) which comprises a multiplicity of nozzles, and/or a module (9) comprising a tank (7) and a depositing assembly (6) which comprises a multiplicity of nozzles, into a machine frame (2) of a depositing machine (1) comprising arms, in particular a depositing machine as claimed in one of claims 1 to 8, wherein the method comprises the following steps:
- introducing at least one component (10) into the machine frame (2), wherein at least one projecting element (28) and one corresponding clearance (29), in particular one bolt (18, 20) and at least one corresponding bolt hole, each being attached to the component, on the one hand, and to the machine frame, on the other hand, are mutually converged;
- establishing a substantially horizontal plug-in connection, in particular a form-fit, between bolt (18, 20) and bolt hole (21, 22), wherein the plug-in connection (11) is aligned along along an axis which runs parallel with the axes of the arms of the frame, wherein the plug-in connection (11) is releasable by mutual axial displacement of the component and of the machine frame.

10. The method as claimed in claim 9 comprising the following steps:
- offering up a module (9) in front of the machine frame in such a manner that the module is located in the front region between arms (3) of the machine frame (2);
- introducing the module (9) into the region between the arms (3) in such a manner that a substantially horizontal plug-in connection (11), in particular a bolt connection, is configured between the machine frame (2) and a further frame (13) of the module (9), wherein the plug-in connection (11) is aligned along an axis which runs parallel with the axes of the arms of the frame;
- linking pistons of the module to actuation means (5) ;
- linking the motor to a dispensing device (12).

11. The method as claimed in claim 9 or 10, **characterized in that** the component (10), in particular the module (9), is guided on guides (14), in particular a roller track (19), between arms (3) of the machine frame (2).

12. The method as claimed in claim 11, **characterized in that** the component, upon configuration of the plug-in connection (11), in particular upon configuration of a form-fit of the bolt connection, is raised from the guide (14), in particular from the roller track (19).

13. A method for removing at least one component, namely a tank (7), a depositing assembly (6) which comprises a multiplicity of nozzles, and/or a module comprising a tank (7) and a depositing assembly (6) which comprises a multiplicity of nozzles, from a machine frame (2) of a depositing machine (1) wherein the machine frame (2) comprises arms, in particular as claimed in one of claims 1 to 8, wherein the method comprises the following steps:
- releasing a substantially horizontal plug-in connection, wherein the the plug-in connection (11) is aligned along an axis which runs parallel with the axes of the arms of the frame, in particular releasing a form-fit between at least one projecting member, in particular a bolt (18, 20), and at least one corresponding clearance, in particular a bolt hole (21, 22), each being disposed on the component, on the one hand, and on the machine frame (2), on the other hand, by mutual axial displacement, preferably in a substantially horizontal direction,
- displacing the component in relation to the machine frame (2), wherein projecting member and corresponding clearance, in particular bolt (18, 20) and bolt hole (21, 22) are removed from one another.

14. The method as claimed in claim 13, wherein the method comprises at least one of the following further steps:
- separating the depositing assembly from actuation means (5) and/or from a motor,
- separating a stirring device (8) from a motor,
- lowering the component onto a guide (14), in particular a roller track (19),
- horizontally displacing the component (10) on a guide (14), in particular a roller track (19),
- transferring the component (10) by way of a carrier device.

15. A construction kit for converting a depositing machine which comprises a machine frame (2) with arms, a depositing assembly (6), preferably disposed below a tank (7), for delivering the foodstuff mass from the depositing machine, comprising a multiplicity of nozzles, and at least one tank (7) for supplying the foodstuff mass to the depositing assembly, wherein a composent, namely, the tank (7), the depositing assembly (6), and/or a module (9) comprising a tank (7) and a depositing assembly (6), is/are removable from the machine frame (2),
**characterized in that** the construction kit for the conversion comprises
- at least one first carrier part which is fastenable to a component, in particular to the tank (7), the depositing assembly (6), and/or the module (9); and
- at least one second carrier part which is fastenable to the machine frame (2),
wherein at least one projecting member (28) and/or at least one clearance (29), in particular a bolt (18, 20) and/or a bolt hole (21, 22), is/are disposed on each of the first carrier part and the second carrier part, and wherein a plug-in connection (11), in particular a form-fitting bolt connection, is establishable between the first and the second carrier part, wherein the plug-in connection (11) is aligned along an axis which runs parallel with the axes of the arms of the frame, and whichis releasable by mutual axial displacement of the component and of the machine frame.

## Revendications

1. Machine de coulée pour la coulée d'une masse de produit alimentaire, notamment d'une masse de graisse, munie
- d'un cadre de machine (2) comprenant des bras,
- d'un agencement de coulée (6) pour le déversement de la masse de produit alimentaire hors de la machine de coulée (1), qui comprend une pluralité de buses et qui est de préférence agencé en dessous d'un réservoir (7),
- d'au moins un réservoir (7) pour l'acheminement de la masse de produit alimentaire vers l'agencement de coulée (6),
au moins un composant (10) de la machine de coulée (1), à savoir le réservoir (7), l'agencement de coulée (6) et/ou un module (9), comprenant un réservoir (7) et un agencement de coulée (6), pouvant être retiré du cadre de machine (2),
**caractérisée en ce qu'**au moins un composant (10) est fixé au cadre de machine (2) au moyen d'une connexion par enfichage (11) agencée essentiellement horizontalement, notamment d'une connexion par boulon, la connexion par enfichage étant dirigée le long d'un axe qui est parallèle aux axes des bras du cadre de machine, la connexion par enfichage étant détachable par un coulissement axial mutuel du composant et du cadre de machine.

2. Machine de coulée (1) selon la revendication 1, comprenant
- au moins un réservoir (7), qui contient un produit pour la coulée et qui est équipé d'un dispositif d'agitation (8), afin d'agiter le produit contenu dans celui-ci ;
- un agencement de coulée (6), qui est localisé en dessous du réservoir (7) et comprend :
a. au moins une série de pistons horizontaux, qui réalisent
- une course d'aspiration, afin de soutirer du produit du réservoir, et
- une course d'éjection, afin d'éjecter le produit soutiré ; et
b. au moins un dispositif de déchargement (12), qui tourne entre
- une première position, afin de recevoir le produit soutiré par les pistons, et
- une deuxième position, qui permet un écoulement du produit éjecté par les pistons ;
- un moteur pour la rotation du dispositif de déchargement (12) ;
- des moyens d'actionnement (5), afin de déplacer les pistons en aller-retour ; les moyens d'actionnement (5) étant reliés de manière détachable avec les pistons ; et
- un cadre de machine (2), qui porte le moteur et comprend deux bras (3), qui sont en saillie le long d'axes horizontaux parallèles respectifs (4) et sont équipés des moyens d'actionnement (5) ;
- le réservoir (7) et l'agencement de coulée (6) formant une partie d'un module (9), qui peut être retiré en un morceau du cadre (2) ; et
- le module (9) étant relié de manière détachable avec le moteur et étant équipé d'un cadre supplémentaire (13),
et le cadre supplémentaire (13) étant fixé dans le cadre de machine (2) par l'intermédiaire d'une connexion par boulon (11) par complémentarité de formes agencée essentiellement horizontalement, la connexion par enfichage étant dirigée le long d'un axe qui est parallèle aux axes des bras du cadre de machine.

3. Machine de coulée selon la revendication 1 ou 2, **caractérisée en ce que** la connexion par enfichage (11) comprend d'un côté au moins un trou de boulon (21, 22), notamment un trou borgne (30) ou une pénétration, et d'un autre côté au moins un boulon (18, 20) agencé dans celui-ci à l'état monté.

4. Machine de coulée selon l'une quelconque des revendications 1 ou 2, **caractérisée en ce qu'**une connexion par boulon est formée par
- au moins un boulon (18, 20) agencé sur le composant (10) et/ou au moins un trou de boulon (21, 22) agencé sur le composant (10) d'un côté, et
- au moins un trou de boulon (21, 22) agencé sur le cadre de machine (2) et/ou au moins un boulon (18, 20) agencé sur le cadre de machine (2) d'un autre côté,
le boulon (18, 20) et le trou de boulon (21, 22) étant agencés de telle sorte qu'ils coopèrent à l'état monté, notamment forment une complémentarité de formes, et maintiennent le composant (10) dans le cadre de machine (2) .

5. Machine de coulée selon l'une quelconque des revendications 1 à 4, **caractérisée en ce que** la machine de coulée (1) comprend au moins un moteur et des moyens d'actionnement (5) pour l'actionnement de l'agencement de coulée (6), le moteur et les moyens d'actionnement (5) étant agencés sur le cadre de machine (2), le réservoir (7) et/ou l'agencement de coulée (6) individuellement ou le réservoir (7) et l'agencement de coulée (6) en tant que module (9) pouvant être retirés en un morceau du moteur et des moyens d'actionnement (5) .

6. Machine de coulée selon l'une quelconque des revendications 1 à 5, **caractérisée en ce que** le cadre de machine (2) comprend une plaque arrière (37), sur laquelle l'au moins un boulon (18, 20) et/ou l'au moins un trou de boulon (21, 22) est prévu et notamment également des couplages pour la connexion d'au moins un moteur.

7. Machine de coulée selon l'une quelconque des revendications 1 à 6, **caractérisée en ce que** des composants (39), qui pénètrent dans le cadre de machine (2) et comprennent des éléments en saillie (28) et/ou des évidements (29) pour une connexion par enfichage (11), notamment des boulons (18, 20) et/ou des trous de boulons (21, 22) pour une connexion par boulon, sont agencés dans une zone (38), éloignée d'une paroi arrière (37), du cadre de machine (2).

8. Machine de coulée selon l'une quelconque des revendications 1 à 7, **caractérisée en ce que** des guides (14), notamment des rouleaux (16), sont disposés sur le cadre de machine (2), sur lesquels l'au moins un composant (10), notamment le réservoir (7) et/ou l'agencement de coulée (6) individuellement ou le réservoir (7) et l'agencement de coulée (6) en tant que module (9), peuvent être guidés, au moins un élément en saillie (28) et un évidement correspondant (29), notamment un boulon (18, 20) et un trou de boulon correspondant (21, 22), pouvant être amenés l'un à l'autre, et les guides (14) étant configurés de telle sorte que le composant (10) ne repose pas sur le guide (14) lors de l'établissement complet de la connexion par enfichage (11), notamment de la complémentarité de formes complète.

9. Procédé d'insertion d'un composant, à savoir d'un réservoir (7), d'un agencement de coulée (6), qui comprend une pluralité de buses, et/ou d'un module (9) comprenant un réservoir (7) et un agencement de coulée (6), qui comprend une pluralité de buses, dans un cadre de machine (2) d'une machine de coulée (1) comprenant des bras, notamment d'une machine de coulée selon l'une quelconque des revendications 1 à 8, le procédé comprenant les étapes suivantes :
- l'introduction au moins du composant (10) dans le cadre de machine (2), au moins un élément en saillie (28) et un évidement correspondant (29), notamment un boulon (18, 20) et au moins un trou de boulon correspondant, qui sont respectivement disposés sur le composant d'un côté et le cadre de machine d'un autre côté, étant amenés l'un à l'autre ;
- la création d'une connexion par enfichage essentiellement horizontale, notamment d'une complémentarité de formes entre le boulon (18, 20) et le trou de boulon (21, 22), la connexion par enfichage étant dirigée le long d'un axe qui est parallèle aux axes des bras du cadre de machine, la connexion par enfichage étant détachable par un coulissement axial mutuel du composant et du cadre de machine.

10. Procédé selon la revendication 9, comprenant les étapes suivantes :
- le rapprochement d'un module (9) d'un cadre de machine de telle sorte que le module se trouve dans la zone avant entre les bras (3) du cadre de machine (2) ;
- l'introduction du module (9) dans la zone entre les bras (3) de telle sorte qu'une connexion par enfichage essentiellement horizontale (11), notamment une connexion par boulon, se forme entre le cadre de machine (2) et un cadre supplémentaire (13) du module (9), la connexion par enfichage étant dirigée le long d'un axe qui est parallèle aux axes des bras du cadre de machine ;
- la liaison de pistons du module à des moyens d'actionnement (5) ;
- la liaison d'un moteur à un dispositif de déchargement (12).

11. Procédé selon la revendication 9 ou 10, **caractérisé en ce que** le composant (10), notamment le module (9), est guidé entre les bras (3) du cadre de machine (2) sur des guides (14), notamment un convoyeur à rouleaux (19).

12. Procédé selon la revendication 11, **caractérisé en ce que** le composant est soulevé du guide (14), notamment du convoyeur à rouleaux (19), lors de la formation de la connexion par enfichage (11), notamment lors de la formation d'une complémentarité de formes de la connexion par boulon.

13. Procédé pour retirer au moins un composant, à savoir un réservoir (7), un agencement de coulée (6), qui comprend une pluralité de buses, et/ou un module comprenant un réservoir (7) et un agencement de coulée (6), qui comprend une pluralité de buses, d'un cadre de machine (2) d'une machine de coulée (1), le cadre de machine comprenant des bras, notamment selon l'une quelconque des revendications 1 à 8, le procédé comprenant les étapes suivantes :
- le détachement d'une connexion par enfichage essentiellement horizontale, la connexion par enfichage étant dirigée le long d'un axe qui est parallèle aux axes de bras du cadre de machine, notamment le détachement d'une complémentarité de formes entre au moins un composant en saillie, notamment un boulon (18, 20), et au moins un évidement correspondant, notamment un trou de boulon (21, 22), qui sont respectivement agencés sur le composant d'un côté et le cadre de machine (2) d'un autre côté, par coulissement axial mutuel du composant et du cadre de machine,
- le coulissement du composant par rapport au cadre de machine (2), le composant en saillie et l'évidement correspondant, notamment le boulon (18, 20) et le trou de boulon (21, 22), étant retirés l'un de l'autre.

14. Procédé selon la revendication 13, le procédé comprenant au moins une des étapes supplémentaires suivantes :
- la séparation de l'agencement de coulée de moyens d'actionnement (5) et/ou d'un moteur,
- la séparation d'un dispositif d'agitation (8) d'un moteur,
- l'abaissement du composant sur un guide (14), notamment un convoyeur à rouleaux (19),
- le coulissement horizontal du composant (10) sur un guide (14), notamment un convoyeur à rouleaux (19),
- la prise en charge du composant (10) par un dispositif de support.

15. Kit pour modifier une machine de coulée, qui comprend un cadre de machine (2) muni de bras, un agencement de coulée (6) pour le déversement de la masse de produit alimentaire hors de la machine de coulée, qui comprend une pluralité de buses et qui est de préférence agencé en dessous d'un réservoir (7), et au moins un réservoir (7) pour l'acheminement de la masse de produit alimentaire vers l'agencement de coulée, un composant, à savoir le réservoir (7), l'agencement de coulée (6) et/ou un module (9), comprenant un réservoir (7) et un agencement de coulée (6), pouvant être retirés du cadre de machine (2), **caractérisé en ce que** le kit pour modifier comprend
- au moins une première partie de support, qui peut être fixée sur un composant, notamment le réservoir (7), l'agencement de coulée (6) et/ou le module (9) ; et
- au moins une deuxième partie de support, qui peut être fixée sur le cadre de machine (2),
respectivement au moins un composant en saillie (28) et/ou au moins un évidement (29), notamment un boulon (18, 20) et/ou un trou de boulon (21, 22), étant agencés sur la première partie de support et sur la deuxième partie de support, et une connexion par enfichage (11), notamment une connexion par boulon par complémentarité de formes, pouvant être créée entre la première et la deuxième partie de support, la connexion par enfichage étant dirigée le long d'un axe qui est parallèle aux axes des bras du cadre de machine, et étant détachable par un coulissement axial mutuel du composant et du cadre de machine.
